# NEUE EUROPÄISCHE PATENTSCHRIFT

(11) **EP 0 353 332 B2**
(45) Veröffentlichungstag und Bekanntmachung des Hinweises auf die Entscheidung über den Einspruch: **03.09.1997**
(45) Hinweis auf die Patenterteilung: 06.04.1994
(21) Anmeldenummer: 88112775.7
(22) Anmeldetag: 05.08.1988
(51) Int. Cl.: E05F 15/00, F16P 3/12

(54) **Sicherheitskontaktschiene**
Safety contact edge
Bordure avec contacts de sécurité

(43) Veröffentlichungstag der Anmeldung: 07.02.1990
(73) Patentinhaber: Beckhausen, Karlheinz, D-50937 Köln (DE)
(72) Erfinder: Beckhausen, Karlheinz, D-50937 Köln (DE)
(74) Vertreter: Nau, Walter, Dipl.-Ing.

(56) Entgegenhaltungen:
- DE-A- 2 643 505
- DE-A- 3 304 400
- DE-A- 3 411 198
- DE-A- 3 724 085
- DE-U- 8 809 726
- US-A- 3 710 050

## Beschreibung

Die Erfindung bezieht sich auf eine Sicherheitskontaktschiene für kraftbetätigte Anlagen, wie Rolltore, Rollgitter usw. und Hebe-, Arbeitsbühnen und dergl. sowie zur Absicherung von Maschinen oder Räumen, z.B. als Trittsicherung, mit einem Gummihohlprofil, innerhalb dessen eine schneidenartige Rippe vorgesehen ist, wobei die Oberfläche der Rippe und der Gegenfläche des Gummihohlprofils elektrisch leitend ausgebildet sind und das gegenseitige Berühren der Oberflächen zu einem Schaltimpuls führt.

Eine gattungsgemäße Sicherheitskontaktschiene bzw. ein entsprechendes Gummihohlprofil sowie die dazugehörige Schaltung ist durch die DE 33 04 400 A1 bekannt. Der prinzipielle Aufbau der Sicherheitskontaktschiene bzw. des Gummihohlprofils hat sich auch als günstig erwiesen. Es stellte sich jedoch heraus, daß die elektrisch leitende Oberfläche an der Rippe bzw. der Gegenfläche des Gummihohlprofils nicht reproduzierbar dargestellt werden konnte, insbesondere nicht beim Serieneinsatz des Gummihohlprofils, bei dem es unvermeidbar ist, daß beim Transport, Verarbeiten und dergl. ein Biegen bzw. Knicken des Gummihohlprofils erfolgt. Es zeigte sich auch, daß beim Einziehen des Gummihohlprofils in die Halterung der Sicherheitskontaktschiene ein Einreissen der Oberfläche und sogar der Rippe bzw. der Gegenfläche selbst erfolgt ist. Desweiteren besteht auch das Bedürfnis, daß entlang des Gummihohlprofils Schaltlitzen und derg. gefuhrt werden sollen.

Darüber hinaus ist auch die DE 26 43 505 A1 bekannt, die ebenfalls eine Sicherheitskontaktschiene für kraftbetätigte Anlagen sowie zur Absicherung von Maschinen oder Räumen mit einem Gummihohlprofil zeigt, innerhalb dessen ein halbkreisförmiger Bereich vorgesehen ist, wobei dieser Bereich teilweise und das gegenüberliegende Gummihohlprofil ebenfalls teilweise elektrisch leitend ausgebildet ist und das gegenseitige Berühren der Oberflächen zu einem Schaltimpuls führt. Eine schneidenartige Rippe ist nicht erwähnt.

Aufgabe der vorliegenden Erfindung ist es daher, die beschriebenen Nachteile und Probleme zu beheben und mit einfachen Mitteln eine Sicherheitskontaktschiene bzw. ein Gummihohlprofil zur Verfügung zu stellen, das unempfindlich bei der Montage ist, preisgünstig hergestellt werden kann und darüberhinaus auch starke Biegungen zuläßt, ohne daß die Leitfahigkeit zur Erzeugung der Schaltimpulse beeinträchtigt ist.

Diese Aufgabe wird dadurch gelöst, daß im Inneren der Rippe und im Inneren des leitenden Bereiches des Gummihohlprofils elektrisch leitende Drähte oder Litzen aus Metall, Kohle- bzw. Graphitfasern und dergl. angeordnet sind sowie die Rippe und der überwiegende Teil des Gummihohlprofils vollständig elektrisch leitend ausgeführt sind, wobei die Leitfähigkeit durch Beimischen von leitenden Stoffen entsteht und daß der Rippenbefestigungsgrund des Gummiholprofils elektrisch nicht leitend ausgebildet ist und daß das ganze übrige Gummihohlprofil elektrisch leitend ist.

Durch diese Lösungsmöglichkeit wird in den leitenden Bereichen des Gummihohlprofils ein ausreichender leitfähiger Querschnitt zur Verfügung gestellt, so daß auch unvorhergesehene Knickungen mit Einrissen in der Oberfläche nicht zu einer nennenswerten Beeinträchtigung der Leitfähigkeit fuhren. Desweiteren ist eine durchgehend leitfähige Wandung bzw. Rippe preisgünstiger und funktionssicherer herzustellen, so daß insgesamt eine Vereinfachung, Verbesserung und Verbilligung des Gummihohlprofils entsteht. Weiterhin wird vorgeschlagen, daß in bzw. auf deren Oberflächen entlang der Rippe bzw. des leitenden Bereichs des Gummihohlprofils elektrisch leitende Drähte oder Litzen anzuordnen. Diese Drähte oder Litzen dienen ebenfalls einerseits zur Erhöhung der Zugfestigkeit der Rippe bzw. des gesamten Gummihohlprofils und darüberhinaus auch zur Verbesserung der Leitfähigkeit innerhalb bzw. an der Oberfläche der Rippe bzw. des leitenden Bereichs des Gummihohlprofils. Dadurch ist sichergestellt, daß auch starkes Einknikken des Gummihohlprofils nicht zu nennenswerter Beschädigung der elektrischen Leitfähigkeit der Rippe bzw. des leitenden Bereichs des Gummihohlprofils führt. Da diese Drähte oder Litzen in Verbindung mit den elektrisch leitenden Bereichen stehen, stehen diese als zusätzliche Signalleitungen zur Verfügung.

Da es insbesondere darauf ankommt, daß die Rippe und der mit der Rippe in Berührung kommende übrige Teil des Gummihohlprofils gute elektrische Leitfähigkeit aufweist, reicht es aus, wenn diese Teile aus elektrisch leitendem Material hergestellt sind. Das hat den Vorteil, daß die Befestigungsleiste mit den Hinterschneidungsnuten, mit der das Gummihohlprofil in eine Halterung der Sicherheitskontaktschiene eingesetzt ist, nicht elektrisch leitend ist, so daß keine elektrischen Kontakte zu der Sicherheitskontaktschiene auftreten.

Da die Befestigungsleiste in diesem Fall nicht leitend ist, können entlang dieser elektrisch leitende Drähte bzw. Litzen angeordnet werden, die unisoliert eingebracht werden können und als Signalleitungen und dergl. zur Verfügung stehen. Weiterhin wird dadurch auch die Festigkeit des Gummihohlprofils bzw. der Befestigungsleiste erhöht.

Es ist aber auch erfindungsgemäß möglich, nur den Rippenbefestigungsgrund des Gummihohlprofils elektrisch nicht leitend auszubilden und das übrige Gummihohlprofil aus elektrisch leitendem Material herzustellen. Dann müssen Drähte, Litzen und dergl. in der Befestigungsleiste, wenn sie über die mechanische Festigkeitserhöhung hinaus auch elektrische Signale übertragen sollen, isoliert sein, damit keine elektrische Verbindung zwischen den Drähten, Litzen und dergl. entsteht.

Werden die elektrisch leitenden Drähte und dergl. als Widerstandsdrähte ausgebildet, so verändert sich der Widerstand in der Rippe bzw. im leitenden Bereich des Gummihohlprofils entlang des Gummihohlprofils. Kommt nun die Rippe an der Gegenfläche zur Anlage, so kann über den Schaltimpuls hinaus auch festgestellt werden, wo Örtlich die Berührung stattgefunden hat, da dies am vorliegenden Widerstandswert ermittelt werden kann. Die besagten Drähte können auch als Heizdrähte ausgebildet sein. Das hat den Vorteil, daß das Gummihohlprofil auch in Kältebereichen, Kältekammern usw. eingesetzt werden kann, ohne daß dieser Bereich ein- bzw. festfriert.

In weiterer Ausgestaltung der Erfindung wird vorgeschlagen, innerhalb der seitlichen Hinterschneidungsnuten je eine weitere Nut einzuarbeiten, die der Befestigungsleiste benachbart ist. Dadurch ist es möglich, das Gummihohlprofil in verschiedene Halterungen einzuschieben bzw. einzuführen, so daß die Einsatzmöglichkeiten des Gummihohlprofils erhöht werden.

In weiterer Ausgestaltung des Gummihohlprofils wird vorgeschlagen, daß in der Außenfläche des Gummihohlprofils, nahe der Befestigungsleiste entlang des Profils Nuten, vorzugsweise mit schwalbenschwanzförmigem oder kreisförmigem Querschnitt, eingearbeitet sind. In diesen Nuten können zusätzliche, das Gummihohlprofil überragende Dichtleisten bzw. Dichtprofile eingesetzt werden. Dies ist besonders vorteilhaft bzw. wichtig, wenn die Sicherheitskontaktschienen mit unebenen Gegenflächen in Berührung kommen und zusätzlich zu ihrer Sicherheitsfunktion auch eine Dichtfunktion ausüben sollen. Die zusätzlichen, das Gummihohlprofil überragenden Dichtleisten bzw. Dichtprofile überragen das Gummihohlprofil und füllen dabei Unebenheiten und dergl. aus. In diesen Nuten können aber auch Drähte, Kabel und dergl. eingelegt werden, die für den Betrieb der Anlage vorteilhaft sind. Es kann beispielsweise auch die Rückleitung vom einen Ende der Kontaktschiene zum anderen Ende darin verlegt werden. Abhängig von der Größe des Kabels kann dieses auch über Vorsprünge oder Leisten bzw. mittels Klipsen in der Nut befestigt werden.

Es hat sich weiterhin gezeigt, daß ein erfindungsgemäß hergestelltes Gummihohlprofil in verschiedener Verlegungsweise auf der Unterseite von beliebigen Flächen befestigt werden kann, so daß ein spiralförmiger, schlangenförmiger bzw. zickzack-förmiger Verlauf des Gummihohlprofils entsteht. Eine solche Fläche kann dann in bzw. auf dem Boden im Bereich zu sichernder Maschinen, Räumen und dergl. auf bzw. eingesetzt werden, so daß dadurch Trittsicherungen entstehen. Beim Betreten dieser Trittflächen können beliebige Schaltfunktionen ausgeführt werden. Es ist auch möglich, die Gummihohlprofile auf der Unterseite von Flächen streifenförmig auszubilden, so daß eine Vielzahl von einzelnen Kontaktstreifen entsteht.

Zur weiteren Erläuterung der Erfindung wird auf die Zeichnungen verwiesen, in denen mehrere Ausführungsbeispiele der Erfindung vereinfacht dargestellt sind. Alle Abbildungen zeigen Querschnitte durch erfindungsgemäße Hohlprofile.
Es zeigen:
- Fig. 1: ein Gummihohlprofil, bei dem die Rippe und der möglicherweise mit der Rippe in Berührung kommende Bereich des Gummihohlprofils aus elektrisch leitendem Material hergestellt sind, wobei das übrige Hohlprofil nicht leitend ist;
- Fig. 2: ein Gummihohlprofil, bei dem lediglich der Rippenbefestigungsgrund nicht leitend ausgeführt ist, wogegen das ganze übrige Gummihohlprofil elektrisch leitend ausgeführt ist und die seitlichen Hinterschneidungsnuten von großen Halterungen ausgefüllt sind;
- Fig. 3: ein Gummihohlprofil gemäß Fig. 2, bei dem kleine Halterungen in die im Nutengrund der Hinterschneidungsnuten eingebrachten weiteren Nuten eingreifen;
- Fig. 4: ein Gummihohlprofil gemäß den Fig. 2 und 3, bei dem in den Außenflächen des Gummihohlprofils Nuten vorgesehen sind, in denen eine Dichtleiste einseitig eingesetzt ist und
- Fig. 5: ein Gummihohlprofil gemäß Fig. 4, bei dem in beiden Nuten in der Außenfläche des Gummihohlprofils eine, das Gummihohlprofil vollständig überragende Dichtprofil eingesetzt ist.

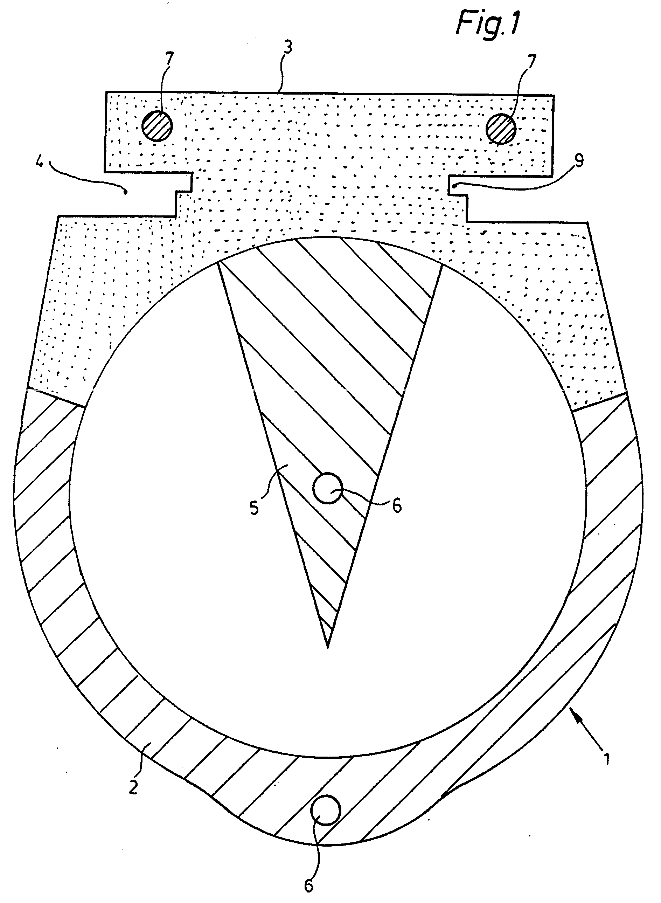

In den Figuren 1 bis 4 wird, soweit im einzelnen dargestellt, mit 1 allgemein ein Gummihohlprofil bezeichnet, daß einen schlauchförmigen Grundkörper 2 aufweist, entlang dessen eine Befestigungsleiste 3 angeformt ist, wobei zwischen der Befestigungsleiste 3 und dem schlauchförmigen Grundkörper 2 seitliche Hinterschneidungsnuten 4 vorgesehen sind. Innerhalb des schlauchartigen Grundkörpers ist eine schneidenartige Rippe 5 angeformt, deren Nutengrund der Befestigungsleiste 3 benachbart ist. Die schraffierten Flächen des Gummihohlprofils sind aus elektrisch leitendem Material hergestellt, während die punktierten Flächen aus elektrisch nicht leitendem Material gefertigt sind.

Wie den Figuren 1 bis 4 weiter zu entnehmen ist, ist innerhalb der schneidenartigen Rippe 5 und dem leitenden Bereich des Gummihohlprofils bzw. schlauchförmigen Grundkörper 2 ein mit 6 bezeichneter elektrisch leitender Draht bzw. Litze angeordnet, der unisoliert eingesetzt ist, die Leitfähigkeit verbessert und die Zugfestigkeit erhöht.

Wie Fig. 1 weiterhin zu entnehmen ist, sind in der Befestigungsleiste 3 Signalleitungen 7 angeordnet, die, da dieser Bereich ebenfalls nicht leitend ausgeführt ist, ohne Isolierung angeordnet sind. Sie dienen dabei sowohl der Übertragung von Signalen als auch der Zugfestigkeitserhöhung der Befestigungsleiste 3.

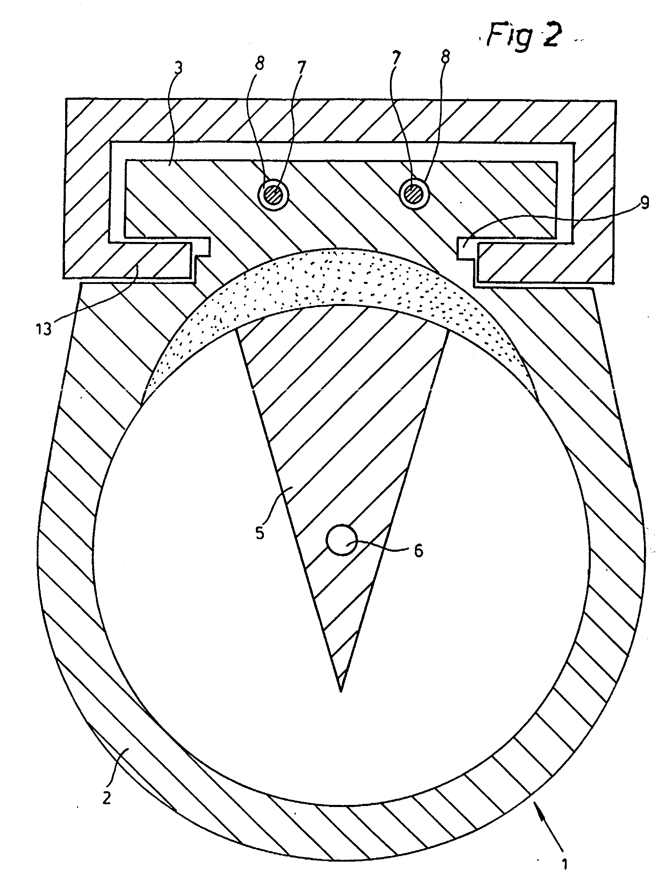

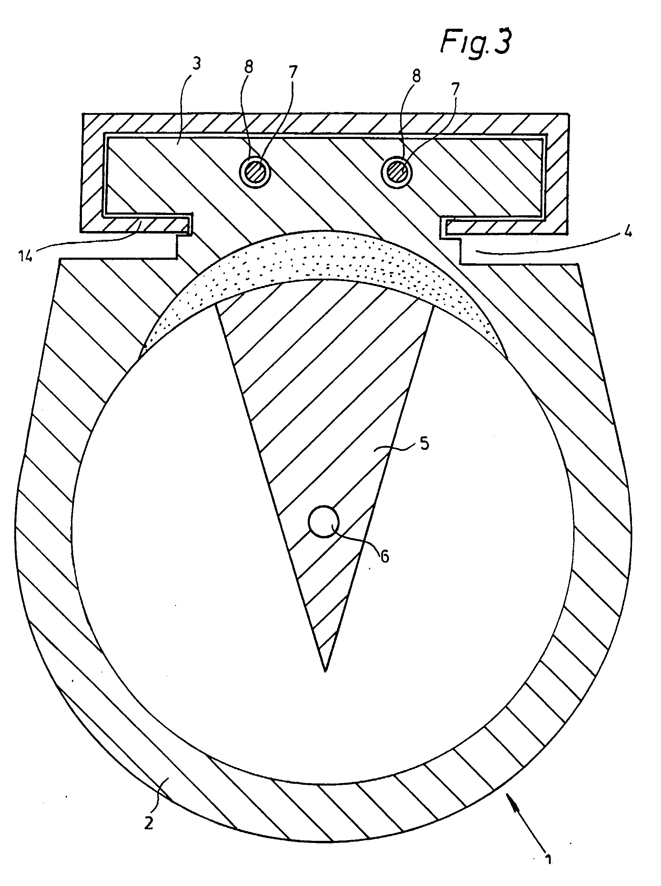

In den Figuren 2 und 3 sind im Gegensatz zu Fig. 1 in die Befestigungsleiste 3 Signalleistungen 7 eingesetzt, die, da das Grundmaterial elektrisch leitend ausgebildet ist, mit Isolierhüllen 8 versehen sind.

Wie den Figuren 2 und 3 weiter zu entnehmen ist, sind die Hinterschneidungsnuten 4 bzw. zusätzliche weitere Nuten 9 in der Lage, eine große Halterung 13 und eine kleine Halterung 14, aufzunehmen.

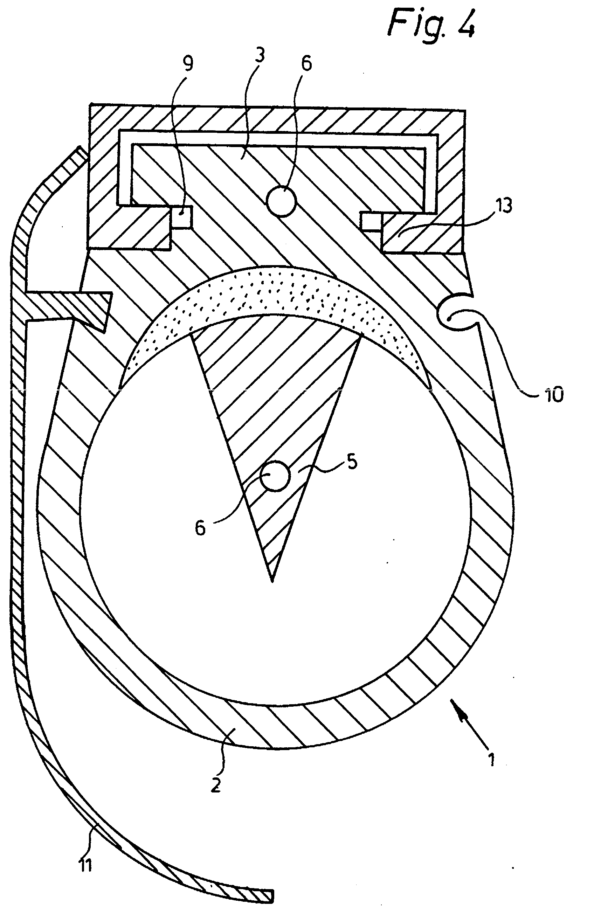

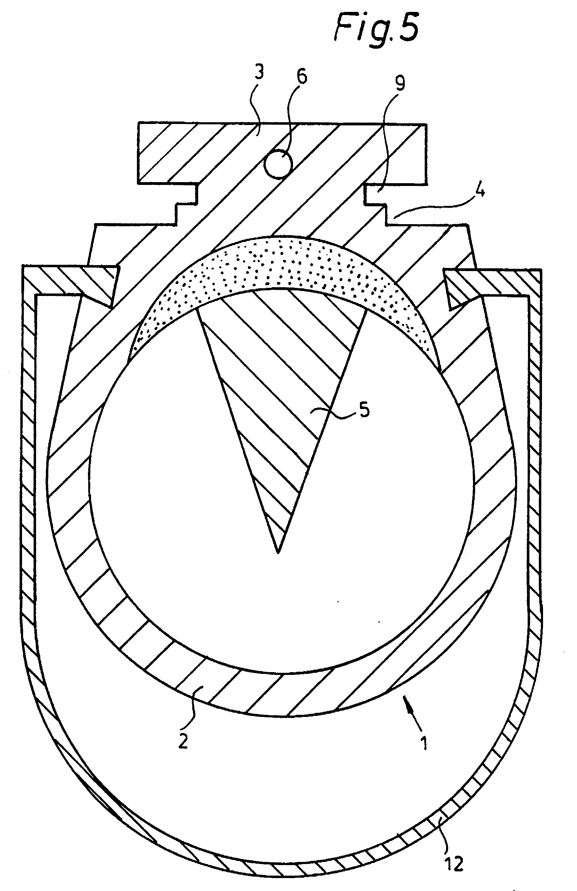

Die in den Fig. 4 und 5 eingearbeiteten schwalbenschwanzbzw. kreisförmigen Nuten 10 sind in der Lage sowohl einseitig angeordnete Dichtleisten 11 als auch das Gummihohlprofil vollständig umschließende Dichtprofile 12 aufzunehmen. Sie können auch Drähte, Kabel und dergl. aufnehmen.

## Patentansprüche

1. Sicherheitskontaktschiene für kraftbetätigte Anlagen, wie Rolltore Rollgitter usw. und Hebe-, Arbeitsbühnen und dergl. sowie zur Absicherung von Maschinen oder Räumen, z.B. als Trittsicherung, mit einem Gummihohlprofil (1), das einen schlauchförmigen Grundkörper (2) aufweist, entlang dessen eine Befestigungsleiste (3) angeformt ist, an der innerhalb des Gummihohlprofils (1) eine schneidenartige Rippe (5) angeformt ist, wobei die Oberfläche der Rippe (5) und der Gegenfläche des Gummihohlprofils elektrisch leitend ausgebildet sind und das gegenseitige Berühren der Oberflächen zu einem Schaltimpuls führt,
**dadurch gekennzeichnet**, daß im Inneren der Rippe (5) und im Inneren des leitenden Bereiches des Gummihohlprofils (1) elektrisch leitende Drähte (6) oder Litzen aus Metall, Kohle- bzw. Graphiffasern und dergl. angeordnet sind sowie die Rippe (5) und der überwiegende Teil des Gummihohlprofils (1) vollständig elektrisch leitend ausgeführt sind, wobei die Leitfähigkeit durch Beimischen von leitenden Stoffen entsteht und daß der Rippenbefestigungsgrund des Gummihohlprofils (1) elektrisch nicht leitend ausgebildet ist und daß das ganze übrige Gummihohlprofil (1) elektrisch leitend ist.

2. Sicherheitskontaktschiene nach einem der vorhergehenden Ansprüche,
*dadurch gekennzeichnet,* daß die elektrisch leitenden Drähte (6) oder Litzen als Widerstandsdrähte und/oder Heizdrähte ausgebildet sind.

3. Sicherheitskontaktschiene nach einem der vorhergehenden Ansprüche, wobei an das Gummihohlprofil (1) eine Befestigungsleiste (3) mit seitlichen Hinterschneidungsnuten (4) angeformt ist,
*dadurch gekennzeichnet,* daß innerhalb der Befestigungsleiste (3) elektrisch leitende Drähte (7) bzw. Litzen angeordnet sind, die unisoliert sind, wenn die Befestigungsleiste elektrisch nicht leitend ist, bzw. isoliert sind, wenn die Befestigungsleiste elektrisch leitend ausgebildet ist.

4. Sicherheitskontaktschiene nach einem der vorhergehenden Ansprüche,
*dadurch gekennzeichnet,* daß innerhalb der nutenartigen Hinterschneidungen (4) in deren Grund je eine weitere Nut (9) eingearbeitet ist, die der Befestigungsleiste (3) benachbart sind.

5. Sicherheitskontaktschiene nach einem der vorhergehenden Ansprüche,
*dadurch gekennzeichnet,* daß in der Außenfläche des Gummihohlprofils (1), nahe der Befestigungsleiste (3), entlang des Gummihohlprofils (1) eine Nut (10) eingearbeitet ist.

6. Sicherheitskontaktschiene nach einem der vorhergehenden Ansprüche,
*dadurch gekennzeichnet,* daß entlang beider Seiten des Gummihohlprofils (1) je eine Nut (10) eingearbeitet sind.

7. Sicherheitskontaktschiene nach einem der vorhergehenden Ansprüche,
*dadurch gekennzeichnet,* daß die Nuten (10) in der Außenfläche des Gummihohlprofils (1) einen hinterschnittenen Querschnitt, z.B. Schwalbenschwanz- oder Kreisprofil, aufweisen.

8. Sicherheitskontaktschiene nach einem der vorhergehenden Ansprüche,
*dadurch gekennzeichnet,* daß in den seitlichen Nuten (10) der Außenflächen das Gummihohlprofil (1) überragende Dichtleisten (11) bzw. Dichtprofile (12) eingesetzt sind.

9. Sicherheitskontaktschiene nach einem der vorhergehenden Ansprüche,
*dadurch gekennzeichnet,* daß in den seitlichen Nuten (10) der Außenflächen ein elektrisch leitender Draht oder Kabel bzw. deren Umhüllung eingesetzt sind.

10. Sicherheitskontaktschiene nach einem der vorhergehenden Ansprüche,
*dadurch gekennzeichnet,* daß das Gummihohlprofil (1) streifen- bzw. schlangenförmig oder kreisförmig auf der Unterseite einer Fläche befestigt ist, wobei diese Fläche als Trittsicherung im Bereich von Maschinen oder Räumen dient.

## Claims

1. A safety contact rail for power-actuated plant such as rolling shutter doors, rolling grilles etc, and for lifting and working platforms and the like, as well as for securing machines or rooms, for instance as a trip device, having a hollow rubber section (1) provided with a tubular basic body (2) along which a fixing strip (3) has been formed, there being a bezel-like rib (5) formed within the hollow rubber section (1), the surface of the rib (5) and the counter-surface of the hollow rubber section being electrically-conducting and wherein mutual contact of the surfaces results in a switching pulse, characterised in that electrically-conducting wires (6) or strands of metal, carbon fibre or graphite fibres and the like are arranged in the interior of the rib (5) and in the interior of the conducting region of the hollow rubber section (1); that the rib (5) and the greater part of the hollow rubber section (1) are entirely electrically-conducting, the conductivity being achieved by the addition of conducting materials; and that the rib-fixing bed of the hollow rubber section (1) is non-electrically conducting and that the entire remainder of the hollow rubber section (1) is electrically-conducting.

2. A safety contact rail according to one of the preceding claims, characterised in that the electrically-conducting wires (6) or strands are in the form of resistance wires and/or heating wires.

3. A safety contact rail according to one of the preceding claims, wherein a fixing strip (3) with lateral undercut grooves (4) is moulded onto the hollow rubber section (1),
characterised in that electrically-conducting wires (7) or strands are arranged within the fixing strip (3), the said wires or strands being non-insulated where the fixing strip is non-electrically-conducting and insulated where the fixing strip is electrically-conducting.

4. A safety contact rail according to any one of the preceding claims, characterised in that a further groove (9) is formed in the bed of each of the groove-like undercuts (4) so as to adjoin the fixing strip (3).

5. A safety contact rail according to any one of the preceding claims, characterised in that a groove (10) is formed in the external surface of the hollow rubber section (1), close to the fixing strip (3), along the hollow rubber section (1).

6. A safety contact rail according to any one of the preceding claims, characterised in that a groove (10) is provided along both sides of the hollow rubber section (1).

7. A safety contact rail according to any one of the preceding claims, characterised in that a groove (10) in the external surface of the hollow rubber section (1) have an undercut cross-section, e.g., a swallowtail or circular cross-section.

8. A safety contact rail according to any one of the preceding claims, characterised in that overhanging self-sealing strips (11) or self-sealing sections (12) are provided in the lateral grooves (10) in the external surfaces of the hollow rubber section (1).

9. A safety contact rail according to any one of the preceding claims, characterised in that an electrically-conducting wire or cable, or the covering thereof, is laid in the lateral grooves (10) in the external surfaces.

10. A safety contact rail according to any one of the preceding claims, characterised in that the hollow rubber section (1) is secured to the underside of a surface in the form of a strip, spiral or circle, the said surface serving as a trip device in the region of machines or rooms.

## Revendications

1. Bordure à contacts de sécurité pour installations actionnées par une force motrice, telles que des portes roulantes, des grilles roulantes etc., et des plates-formes de levage, des plates-formes de travail et analogues, ainsi que pour assurer la sécurité de machines ou d'espaces, par exemple comme sécurité de marche, comprenant une nervure (5) en forme de cisaille dans un profilé creux en caoutchouc (1) la surface de la nervure (5) et la surface opposée du profilé creux en caoutchouc étant constituées de façon à conduire l'électricité, le contact mutuel des surfaces produisant une impulsion de commande,
caractérisée en ce qu'
à l'intérieur de la nervure (5) et dans la zone conductrice du profilé creux en caoutchouc (1), on dispose des câbles (6) ou des fils électriquement conducteurs en métal, en fibres de carbone ou de graphite et analogues, et la nervure (5) et la partie prépondérante du profilé creux en caoutchouc (1) sont réalisées entièrement de façon électriquement conductrice, la conductibilité étant obtenue en mélangeant des matières conductrices, la base de fixation des nervures du profilé creux en caoutchouc (1) n'est pas conducteur d'électricité et tout le reste du profilé creux en caoutchouc (1) est conducteur

2. Bordure à contacts de sécurité selon l'une des revendication 1,
caractérisée en ce que
les fils ou les câbles qui conduisent l'électricité (6) sont constitués comme des fils de résistance et/ou des fils de chauffage.

3. Bordure à contacts de sécurité selon l'une des revendications précédentes, dans laquelle une nervure de fixation (3) est formée sur le profilé creux en caoutchouc (6) avec des rainures latérales en contre-dépouille (4),
caractérisée en ce qu'
à l'intérieur de la nervure de fixation (3), on dispose des fils ou des câbles conduisant l'électricité (7), qui ne sont pas isolés quand la nervure de fixation (3) ne conduit pas l'électricité, ou qui sont isolés quand la nervure de fixation (3) conduit l'électricité.

4. Bordure à contacts de sécurité selon l'une des revendications précédentes,
caractérisée en ce qu'
à l'intérieur des nervures en contre-dépouille (4), une autre rainure (9) est usinée dans leur base, ces autres rainures étant voisines de la nervure de fixation (3).

5. Bordure à contacts de sécurité selon l'une des revendications précédents,
caractérisée en ce que
dans la surface du profilé creux en caoutchouc (1), puis de la nervure de fixation (3), on usine une rainure (10) le long du profilé en caoutchouc (1).

6. Bordure à contacts de sécurité selon l'une des revendications précédents,
caractérisée en ce que
l'on usine une rainure (10) respectivement le long des deux côtés, du profilé creux en caoutchouc (1).

7. Bordure à contacts de sécurité selon l'une des revendications précédentes,
caractérisée en ce que
les rainures (10) présentent dans la surface du profilé creux en caoutchouc (1), une section transversale en contre-dépouille, par exemple à profil en queue d'aronde ou à profil circulaire.

8. Bordure à contacts de sécurité selon l'une des revendications précédentes,
caractérisée en ce que
dans les rainures latérales (10) des surfaces, on insère des lèvres d'étanchéité (11) ou des profilés d'étanchéité (12) faisant saillie sur le profilé creux en caoutchouc (1).

9. Bordure à contacts de sécurité selon l'une des revendications précédentes,
caractérisée en ce que
dans les rainures latérales (10) des surfaces, on insère un fil ou un câble qui conduit l'électricité, ou sa gaine.

10. Bordure à contacts de sécurité selon l'une des revendications précédentes,
caractérisée en ce que
le profilé creux en caoutchouc (1) est fixé sur le côté inférieur d'une face sous forme de bande, sous forme de serpentin, ou sous une forme circulaire, cette face servant de sécurité d'approche dans la zone des machines ou des locaux.
